# EUROPEAN PATENT APPLICATION

(11) **EP 4 468 013 A1**
(43) Date of publication of application: **27.11.2024**
(21) Application number: 23175187.6
(22) Date of filing: 24.05.2023
(51) Int. Cl.: G01S 3/04, G01S 3/16

(54) **SYSTEM AND METHOD FOR SEPARATING ANTENNA SIGNALS FOR RADIO DIRECTION-FINDING**

(71) Applicant: AARONIA AG, 54597 Strickscheid (DE)
(72) Inventor: Chmielus, Thorsten, 54597 Strickscheid (DE)
(74) Representative: Hermann, Felix

(57) **Abstract**

This disclosure relates to a system comprising N≥2 antenna elements for receiving radio waves of a radio frequency signal and M<N receiver units connected via a switch to at least two of the N≥2 antenna elements and a broadband noise source. The switch is configured to connect the at least one receiver unit cyclically and in a known or configured order/pattern to the broadband noise source and the at least two antenna elements. The receiver unit is configured to distinguish the signals received from the at least two antenna elements based on the cycle of the cyclically received signals of the broadband noise source. The antenna signals may subsequently be processed, e.g. using radio direction finding methodologies.

## Description

### Field of the Invention

This disclosure generally relates to the signal multiplexing, synchronization and/or demultiplexing for transmission and reception of multiplexed signals including radio signals and a broadband noise signal. These multiplexing, synchronization and/or demultiplexing techniques may be for example used in radio direction-finding applications.

### Technical Background

(Radio) direction finding ((R)DF) is commonly refers to the use of specialized instruments, antennas and methodologies to determine a physical location of a source of radio frequency (RF) energy. Equipment for DF/RDF - sometimes also called radio direction finder - commonly refers to a device for finding the direction, or bearing, to a radio source. In principle, RDF equipment can be used with any radio source, although the size of the receiver antennas is a function of the wavelength of the radio signals. Such equipment commonly uses an array of antenna elements that receive the radio waves of target radio signals to determine the direction/bearing in which a radio station or an object is located. The radio waves may be for example radio signals transmitted by means of wireless communication technologies (e.g. Bluetooth, 3GPP based wireless communication (e.g. in 4G (LTE/LTE-A)-, 5G-, 6G-based communication networks), Wireless Local Area Networks (WLAN), etc.), radio and television broadcast systems, radar applications, etc. Hence, equipment for DF/RDF may be configured determined the origin of radio signals in one or more frequency bands, including and not limited to the high frequency band (HF - 3-30 MHz), very high frequency band (VHF - 30-300 MHz), ultra high frequency band (UHF - 300-3,000 MHz), super high frequency band (SHF - 3-30 GHz) and/or extremely high frequency band (EHF - 30-300 GHz).

Generally, the methodologies for deriving a direction/bearing from variations in signal amplitude, signal frequency and/or phase to determine the direction (e.g. bearing and azimuth) towards the radio source. Known methodologies of direction finding are use Power of Arrival (PoA) of the received signals, Doppler shift (Doppler DF system), the Watson-Watt principle (typically using Adcock antennas or crossed-loop antennas), correlative interferometry (also known as vector matching), the time difference of arrival (TDOA) of the radio signals received by the antenna array. Also hybrid methodologies are sometimes used. An overview and introduction on DF/RDF is provided for example in the publication by Rhode & Schwarz, "Introduction into Theory of Direction Finding", Radiomonitoring & Radiolocation Catalog 2010/2011, available at https://cdn.rohde-schwarz.com/us/campaigns_2/a_d/Introduction-Into-Theory-of-Direction-Finding.pdf and incorporated herein by reference.

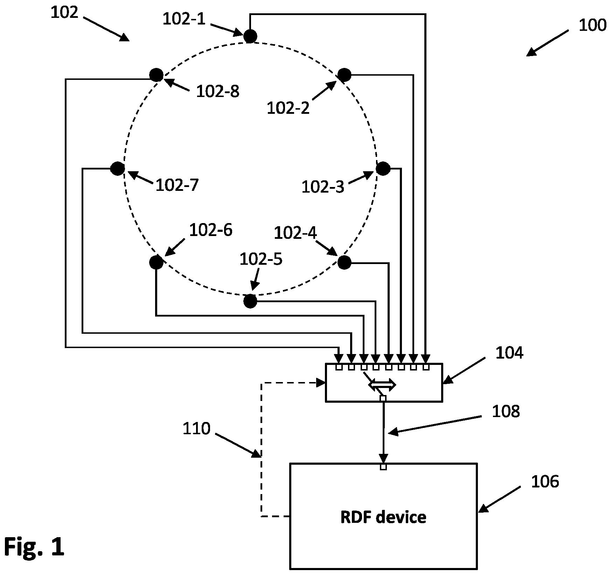

Conventional DF/RDF equipment sometimes uses only a single receiver (or a lower number of receivers in comparison to the number of antenna elements) to lower the data rate and costs of the DF/RDF equipment. Fig. 1 shows an exemplarily DF/RDF system 100 with an antenna array 102 of 8 antenna elements numbered 102-1 to 102-8, which are in a circular arrangement. Each of the antenna elements 102-1 to 102-8 is connected via a radio frequency connection (e.g. coax cable) to a switching device 104, which is an 8-port switch in this example. The individual ports of the switch 104 are indicated by the small squares. The input ports of the switch 104 are thus connected via respective the radio frequency lines to the antenna elements 102-1 to 102-8. The output port of the switch 104, which is also indicated by a small square, connects to the RDF device 106 via another radio frequency connection (e.g. coax cable). Further, the RDF device 106 connects to switch 104 via a control line 110. The connection 110 between the RDF device 106 and switch 104 is typically a data connection, e.g. an Ethernet connection, and allows to the RDF device 106 to control switching individual input ports of the switch 104 to the RDF device 106 via the output port of the switch 104. Typically, the RDF device 106 will control the switch 104 via line 110 to cyclically switch the input ports in sequence, i.e. one-after-another, to the output port so that the antenna signals received at the individual input ports are provided to the output port of the switch 104 (and hence the RDF device 106) in a kind of time-multiplexed fashion, i.e. the antenna signal of a given one of the antenna elements 102-1 to 102-8 is provided to the RDF device 106 while its corresponding in input port of the switch 104 is connected to the output port of the switch 104. Typically, the RDF device 106 controls the switch 104 via line 110 to switch its output port to the next input port (and hence next antenna element) in predetermined intervals so that all input ports are cyclically connected to the output port of the switch 104 in each cycle. As the RDF device 106 controls the switching of the switch 104, the RDF device 106 is also aware at any time, which of the antenna signals of the antenna elements 102-1 to 102-8 is received at the input port of RDF device 106 (which is also indicated by a small square).

Using the radio signals provided from the different antenna elements 102-1 to 102-8 in time-division multiplexed fashion as described in connection with Figure 1, the RDF device 106 can perform radio direction finding using conventional methodologies.

While the above architecture described in connection with Figure 1 is very suitable to perform RDF on the radio signals with long data bursts (for example in the range of more than 20 ms) or on time continuous radio signal, the above architecture of the system 100 is less suitable for RDF on very short radio signals, for example pulsed radio signals or data bursts, which have a duration in the range of about 100 µs, which may for example occur in radar applications or in modern mobile communication systems. To perform RDF on such very short radio signals, the cycle for switch 104 to "rotate" through the antenna elements 102-1 to 102-8 must be selected accordingly, which imposes a drastic reduction of the cycle duration for rotating through antenna elements 102-1 to 102-8. Accurate control of the switching of the switch 104 via the control line 110 as shown in Figure 1 often proves to be difficult, as the controller connection RDF device 106 and the switch 104 is often implemented by means of protocols that have high latency (for example via Ethernet). The use of alternative high-speed data links for control, which however increases costs significantly and might be problematic too (e.g. the RDF device 106 might be located quite far remote from the switch 104 and the antenna error rate 102).

### Summary

In the light of the above, there may be a need for improving the architecture of the system 100 to facilitate RDF for very short radio signals. As will become more apparent, however, the solution discussed herein below are not limited to RDF for very short radio signals but are generally applicable to RDF for any radio signals.

One aspect of this disclosure is based on an architecture of a system 100 which is similar to that shown in Fig. 1. Different from the system in Fig. 1 a signal of broadband noise source (e.g. a noise generator) is cyclically provided to a receiver unit as part of the switch "rotating" through (at least some of) its input ports. The cyclic reception of the broadband noise signal at the receiver unit (as part of the signals received from the switch) enables the receiver unit to determine the cycle (duration of the cycle) of the switch when "rotating" through (at least some of) its input ports. The receiver unit may use this cycle for synchronization and/or demultiplexing/separation of the individual signals received from the switch in a time-multiplexed fashion.

One example embodiment that is based on this aspect provides a system comprising a (integer) number of N≥2 antenna elements for receiving radio waves of a radio frequency signal and a (integer) number of M<N receiver units, wherein at least one of the receiver units is connected via a switch to at least two of the N≥2 antenna elements and a broadband noise source. The switch connects the at least one receiver unit cyclically and in a known or configured order/pattern to the broadband noise source and the at least two antenna elements. Further, the receiver unit can distinguish the signals received from the at least two antenna elements based on the cycle of the cyclically received signals of the broadband noise source. The cycle of the cyclically received signals of the broadband noise source may be also referred to as an interval or time period between periodic repetitions of the broadband noise signal as received by the receiver unit.

In a further embodiment, the at least one receiver unit is configured to receive time-division multiplexed signals of the at least two antenna elements and the broadband noise source from the switch. Further, the receiver unit synchronizes with the time-division multiplexed signals based on the cycle of the cyclically received signals of the broadband noise source to distinguish and/or separate the individual signals from each other. Time-multiplexed may for example mean in this context that the signal received at the receiver unit from the switch contains alternatingly and cyclically intermittent signal portions from the at least two antenna elements and the broadband noise source.

In one example implementation, the at least one receiver unit is connected to the switch via an RF line (e.g. a coax cable) or a fiber optic line (e.g. using RF over Fiber - RFoF). In a further example implementation the at least two antenna elements are connected to the switch via an RF line (e.g. a coax cable or waveguide) or a fiber optic line (e.g. using RF over Fiber - RFoF).

According to a further example embodiment, the system further comprises a radio direction-finding device that performs a radio direction-finding of the radio frequency signal based on the signals received from the at least two antenna elements. Optionally, the radio direction finding unit may be use additional signals received by another one or other ones of the N≥2 antenna elements for direction finding. The additional signals received by the other one or other ones of the N≥2 antenna elements may be for example received by one or more additional receiver units of the system. The M receiver units of the system may be comprised by the radio direction-finding device or may be standalone devices, which may be connected to the radio direction-finding device by means of a data interface.

In another, further embodiment, the receiver unit further determines the cycle (cycle duration) of the cyclically received signals of the broadband noise source. Based on this cycle, the receiver unit can then determine the switching cycle between the received signals from the broadband noise source and the at least two antenna elements (i.e. the time-multiplex structure in the time domain) based on the cycle of the cyclically received signals of the broadband noise source (i.e. the periodic repetitions of the broadband noise signal).

In one example implementation of the embodiments herein above, the system may comprise one receiver unit, i.e. M=1. In this example implementation, the switch connects the receiver unit cyclically and in the known or configured order/pattern to the broadband noise source and the at least two of N antenna elements. This may be suitable for situations, where not all input ports of the switch are connected to antenna elements or where only selected input ports are to be switched via the outport port of the switch to the receiver unit. In another example implementation of the embodiments herein above, the system may comprise one receiver unit, i.e. M=1. In this example implementation, the switch connects the receiver unit cyclically and in the known or configured order/pattern to the broadband noise source and the N antenna elements, i.e. all antenna elements.

In a further example implementation, the system may comprise more than one receiver units. For example, the system could comprise M≥2 receiver units and at least N=2·M antenna elements. In such case, the system may comprise M switches, wherein each of the M switches is configured to connect one of the M receiver units cyclically and in a known or configured order/pattern to the broadband noise source and at least two of the N antenna elements. Notably, the M switches may be connected to distinct subsets of the antenna elements. Further, each of the M receiver units can distinguish the signals received from the at least two antenna elements based on the cycle of the cyclically received signals of the broadband noise source in the manner described in this disclosure.

In some exemplary use case and in accordance with an example embodiment, the radio frequency signal is a pulsed signal or a signal burst. The cycle (cycle duration) of the switch (sometimes also referred to as rotation cycle) is selected or is configurable based on the duration of the pulse or burst, respectively. In another exemplary use case and in accordance with an example embodiment, the radio frequency signal is a pulsed signal or a signal burst. In this case, the cycle of the switch may be equal to or less than the pulse duration of the pulsed signal. In the above example, the duration of the pulse or burst is (in the range of) 500 µs or less, preferably, (in the range of) 100 µs or less.

In accordance with a further embodiment the switch is further configured to connect the receiver unit automatically (e.g. without external triggering of the switching times) and cyclically in the known or configured order/pattern to the broadband noise source and the at least two antenna elements.

In a further embodiment, the broadband noise source and the at least two antenna elements are connected to different input ports of the switch and the receiver unit is connected to the output port of the switch. The duration of the cycle of the switch with which the switch connects the different input ports of the switch in the known or configured order/pattern to the output port of the switch (also referred to as rotation cycle) may be - in one example implementation - configurable or adjustable, e.g. via a control interface of the switch. Moreover, the input ports of the switch to be connected to the output port of the switch and/or the known or configured order/pattern may (also) be configurable or adjustable. This may for example allow to select only individual input ports/antenna elements. Further, this may also allow to define the order in which the antenna elements are switched to the receiver unit.

Another aspect of this disclosure and embodiment relates to a method for separating (or demultiplexing) time-division multiplexed signals. The method may be for example executed in a receiver unit of a system in accordance with the aspect of the disclosure and its embodiments described herein above and in the detailed description part of this disclosure. The method may comprise the following: receiving via a radio frequency signal line cyclically time-division multiplexed signals, the multiplexed signals including signals of a radio frequency signal received at two or more antenna elements of an antenna array (comprising N≥2 antenna elements) and a signal of a broadband noise source broadband noise source which are cyclically repeated in known or configured order/pattern; determining the cycle of the cyclically repeated signal of the broadband noise source; and separating the signals received from at least two antenna elements based on the determined cycle.

In a further embodiment, the method further comprises receiving the time-division multiplexed signals of the at least two antenna elements and the broadband noise source from a switch that generates the time-division multiplexed signals by cyclically switching between the signals of the two antenna elements and the broadband noise source; and synchronizing with the time-division multiplexed signals based on the cycle of the cyclically received signals of the broadband noise source to distinguish the individual signals from each other. Separating the signals received from at least two antenna elements may be for example based on the synchronization.

The aspects of the disclosure may also be implemented using one or more computer readable media which store(s) instructions that, when executed by a processor of a device (e.g. a device implementing the receiver unit or a radio direction-finding device) cause the device to implement the method for separating (or demultiplexing) time-division multiplexed signals according to one of the various embodiments thereof discussed in this disclosure.

### Brief Description of Drawings

The following detailed description refers to the accompanying drawings. The same reference numbers are used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.
**Fig. 1** shows a system 100 suitable for RDF;
**Fig. 2** shows a system 200 suitable for RDF according to an embodiment of the disclosure;
**Fig. 3** shows a system 300 suitable for RDF according to another embodiment of the disclosure;
**Fig. 4** shows an example embodiment a method for separating (or demultiplexing) time-division multiplexed signals according to another embodiment of the disclosure;
**Fig. 5** shows an example embodiment a device implementing the aspects of the disclosure using software instructions.

### Detailed Description

This disclosure generally relates to improvements to an architecture of the system 100 to facilitate RDF for very short radio signals. The solutions discussed herein below are however not limited to RDF for very short radio signals but are generally applicable to RDF for any radio signals.

As noted above, one aspect of this disclosure can be considered based on an architecture of a system 100 which is similar to that shown in Fig. 1. In this architecture, the RDF device 106 actively controls the switching of the switch 104 from one input port to the next input port in sequence. Please note that switching between input ports is considered equivalent to switching between antenna elements 102-1 to 102-8, as each input port is connected to a respective one of the antenna elements 102-1 to 102-8.

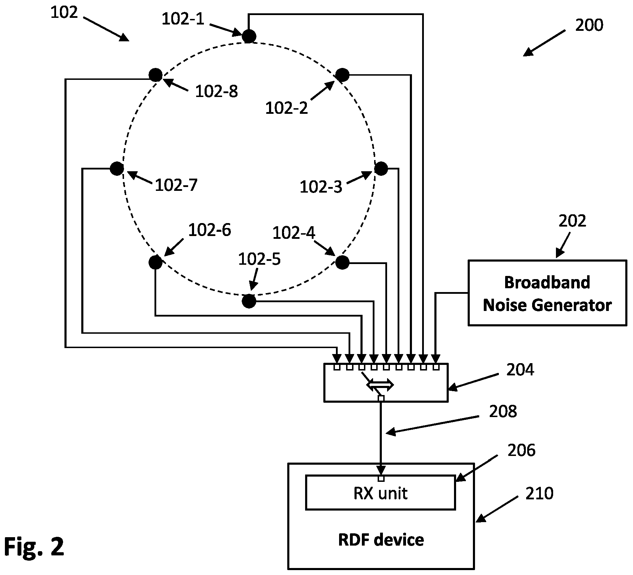

**Fig. 2** shows an example system 200 suitable for RDF according to an embodiment of the disclosure. The main difference of the system 209 in Fig. 2 over system 100 in Fig. 1 is the use of a broadband noise generator 202, which acts as a broadband noise source and provides a broadband noise signal to the switch 204. Switch 204 in Fig. 2 is substantially similar to the switch 104 in Fig. 1, the main difference being that one of the input ports of switch 204 is connected to the broadband noise generator 202 to receive the broadband noise signal. As the switch 204 "rotates" through its input ports (i.e. connects the input ports to the output port of the switch 104 in a predetermined order and repeating sequence) the broadband noise signal of the broadband noise generator 202 is provided to the receiver unit 206 at the times when the output port of the switch 204 is connected to the input port of switch 204 that receives the broadband noise signal from the broadband noise generator 202. Hence, the receiver unit 206 will be able to observe the broadband noise signal on the radio signal line 208 in a given cycle (or interval), and the periodic repetitions of the broadband noise signal of the broadband noise signal on the radio signal line 208 can be considered a clock signal that allows to the receiver unit 206 to synchronize to the sequence of signals from the different input ports that are multiplexed by the switch 204 to its output port in a time-division fashion. Hence, the broadband noise signal of the broadband noise signal is cyclically provided via the radio signal line 208 to a receiver unit 206 as part of the switch 204 "rotating" through (at least some of) its input ports. The cyclic reception of the broadband noise signal at the receiver unit 206 (as part of the signals received from the switch 204) enables the receiver unit 206 to determine the cycle (duration of the cycle) of the switch 204 when "rotating" through (at least some of) its input ports. The receiver unit 206 may use this cycle for determination of the time-multiplex structure of the signal on the radio signal line 208 allowing for demultiplexing/separation of the individual signals received from the switch 204 in the time-multiplexed fashion. The receiver unit 206 may be incorporated (e.g. physically) into the RDF device 210, but may also be implemented as a standalone device which has a data interface to the RDF device 210.

The broadband noise generator 202 may generate a noise signal that is, for example, Additive White Gaussian Noise (AWGN), 1/f noise, or another noise like signal. The broadband noise signal should be preferably at a power level that allows its unambiguous distinction from the expected noise floor (e.g. AWGN noise floor) of the radio signals received with the antenna array 102. For example, the power level of the broadband noise signal that is generated and output by the broadband noise generator 202 is (at least) 2 dB, preferably, (at least) 3dB higher than the expected noise floor of the radio signals received with the antenna array 102. In one example, the receiver unit 206 may further estimate the noise floor in the input signals from the antenna elements and may adjust, via a feedback connection to the broadband noise generator 202, the power level of the broadband noise signal to be at the desired power level higher than the noise floor.

In general, the noise signal of the broadband noise generator 202 does not have to be broadband, as long as the noise signal has a sufficient power level at frequency components that are distinguishable from the target radio signals (i.e. in terms of carrier frequency, bandwidth, etc.) in signal processing by the receiver unit 206. The use of a broadband noise signal, e.g. an AWGN signal, may be advantageous as it ensures that the signal power spreads over a broad spectrum of frequency components so that the signal is distinguishable from target radio signals in all practical frequency bands, noting that the system 200 may be used for RDF of radio signals in one or more different frequency bands, including HF, VHF, UHF, SHF and/or EHF. Alternatively, also other non-noise like signals could be used to implement the "clock signal", e.g. the broadband noise generator 202 could be replaced by a signal generator that produces a time-continuous or pulsed signal, e.g. a pilot-like signal, that is clearly distinguishable in the receiver unit 206 from the target radio signals to received by the antenna array 102. However, the use of a noise signal may be advantageous, as noise signals are likely causing less disturbance/interference with the signals received from the antenna array 102 in the receiver chain of the receiver unit 206.

The switch 204 (which may also be denoted a multiplexer) may be realized by any suitable (broadband) RF switch, e.g. a SP4T-type, SP8T-type or SP16T-type switch. STxT-type broadband RF switches are readily available in the IC marked. For example, the switch 204 could be an UltraCMOS SP8T RF Switch PE42582 by pSemi (Murata) which is an enhanced absorptive SP8T RF switch with eight input ports that supports a frequency range from 9 kHz to 8 GHz.

In system 200 the connection between the switch 204 and the receiver unit 206 (in the example of Fig. 2, the connection is represented by the single radio signal line 208) may be realized by means of any suitable RF connection, e.g. a RF cable, a coax cable (e.g. with BNC connectors), an optical cable (e.g. when using RFoF), free-space optical communication (e.g. laser connection via air) or any other suitable RF connection or RF cable that has low capacitance and tight impedance stability. The connection between the switch 204 and the antenna elements 102-1 to 102-8 may be realized by means of any suitable RF connection, e.g. a RF cable, a coax cable (e.g. with BNC connectors), an optical cable (e.g. when using RFoF), using waveguides, or any other suitable RF connection or RF cable that has low capacitance and tight impedance stability.

The antenna array 102 in Fig. 2 is shown as a circular arrangement of eight antenna elements 102-1 and 102-8. The disclosure is not limited to any particular number of antenna elements in the antenna array or any particular type of antenna. The antenna elements may be broadband antennas to cover signal reception in a broad spectrum (e.g. multiple of the frequency bands), but the antenna elements may also be designed for specific applications and/or frequency bands or ranges. The number of antennas in the array and/or their physical arrangement relative to each other may be for example determined by the RDF methodology used to find the bearing towards the target radio signal. Hence, the use of eight antenna elements 102-1 to 102-8 in a circular arrangement is exemplary only. Thus, the antenna array 102 may comprise more than or less than eight antenna elements, but in any case two or more antenna elements (N ≥ 2). The antenna elements may be arranged in a (single) circular arrangement, in a double circular arrangement (antenna elements are arranged in two circles), in a square arrangement or double square arrangement, etc. Further, some antenna arrays may have an antenna element in the center of the antenna arrangement and/or odd number of antenna elements. The antenna elements of the antenna array 102 may be sensitive to the direction arrival of the target radio signals, e.g. directional antenna elements. For example, the antenna elements in the array 102 may be monopole antennas, dipole (e.g. with reflector to ensure directivity), Yagi antennas, Horn antennas, parabolic dish antennas, patch antennas, etc. or any other suitable directional antenna.

The receiver unit 206 may be any suitable receiver. The bandwidth of the receiver unit may impact (along with the antenna array) the frequency range of the signals that can be subjected to direction finding. For example, the receiver unit 206 may be a broadband receiver so that for example the receiver unit 206 can cover substantially all target frequencies of the signals to be subjected to direction finding. The receiver unit 206 may be also a tunable receiver which can be tuned to target carrier frequency. In addition or alternatively, the bandwidth of the receiver unit 206 may be configurable.

Although the RDF methodology is not limited to Power of Arrival (PoA)-based DF methodologies and for example only, the RDF device 210 is assumed to perform RDF using a Power of Arrival (PoA)-based DF methodology, which is based on the received power for individual frequency bins obtained by the different antenna elements of the antenna array 102. Since the receiver unit 206 can detect the cycle of the switch 204 rotating through the input ports based on the cyclically repeating noise signal from the broadband noise generator 202 at its input port, the receiver unit 206 can synchronize to and/or identify the time division structure of the multiplexed signals, i.e. the signal portions corresponding to the received signals at the different antenna elements of the antenna array 102. The receiver unit 206 may perform analog-to-digital conversion (ADC) of the input signal. The detection of the rotation cycle of the switch 204 is based either on the time-continuous input signal at the input port or the discrete version of the input signal obtained from ADC.

In some example implementation of the receiver unit 206 receives the time-continuous input signal at the input port and provides in-phase (I) and quadrature (Q) components of the time-continuous input signal, wherein each of the I-component and the Q-component of the time-continuous input signal is subjected to ADC separately. Hence, the receiver unit 206 may provide the I- and Q-samples of the input signal at the input port of the switch 204.

The receiver unit 206 may associated the time-continuous input signal at the input port or the discrete version of the input signal obtained from ADC with information on its corresponding antenna element and/or sector for RDF. For example, the time-discrete versions of the I-samples and Q-samples of the input signal obtained from ADC may be associated with information on its corresponding antenna element and/or sector for RDF. The I- and Q-samples of the input signal at the input port of the switch 204, and the information on the antenna element on which they were received (or the sector/bearing associated with the antenna element) may form the basis of subsequent RDF processing.The receiver unit 206 may convert the discrete input signal portions of the different antenna ports (e.g. the I-samples and Q-samples) into the frequency domain (e.g. by means of a Fast Fourier Transform (FFT) or Discrete Cosine Transform (DCT)). For example, the I-samples and Q-samples of the input signal for each of the antenna elements may be converted into the frequency domain individually. The resultant frequency domain signals for the different antenna elements will include the power level for the different frequencies (or frequency bins) of the input signal portion corresponding to the respective antenna element. Further, the receiver unit 206 may provide, for each antenna element from which signals are received, a continuous sequence or data stream of power level-frequency bin pairs over the monitored frequency range for each signal portion from a respective antenna element. Pairs of continuous sequences or data streams of power level-frequency bin pairs may be provided for the I-component and the Q-component for each signal portion from a respective antenna element. The (pair of) continuous sequence(s) or data stream(s) may also include an indication of the antenna element and/or sector information corresponding to the antenna element to facilitate the RDF device 210 to perform RDF. The continuous sequences or data streams for the different antenna elements (and the indication of the antennal elements and/or sectors tow which they belong) may be provided to the RDF device 210 for determining a direction/bearing of a radio signal source using any conventional Power of Arrival (PoA)-based DF methodology.

Alternatively or in a hybrid DF scheme, the receiver unit 206 may also determine the amplitudes for the signal components for the different frequency bins and provide, for each of the antenna elements, the amplitudes for the different frequencies (or frequency bins) of the input signal may be provided to the RDF device 210 for determining a direction/bearing of a radio signal source. Optionally, the frequency domain representations of the individual input signal portions corresponding to the antenna elements may be filtered (e.g. using a Kalman filter) to increase the angular resolution of the DF by the RDF device 210. The filtering may be implemented in the receiver unit 206 (in which case filtered data streams are provided to the RDF device 210) or in the RDF device 210.

Further alternatively or in a hybrid DF scheme, phase shifts of the radio signal received at the different antenna elements 102-1 to 102-8 may be exploited for RDF. In this case, the frequency of the radio signals to be subjected to direction finding should be higher than (e.g. at least twice) frequency of the frequency of cycle of the switch 204's rotation divided by the number of input ports (i.e. connected antenna elements plus one to account for the broadband noise signal) which are cycled through. In this case, the receiver unit 206 may also determine relative phase offsets between the (time continuous or discrete) input signal portions of the different antenna elements and may report that information to the RDF device 210.

In the example embodiment of system 200 as shown in Fig. 2, it is assumed that there is one receiver unit 204 (M=1) only and one switch 204 having all N antenna elements 102-1 to 102-8 and the broadband noise generator coupled to its input ports. This is however only exemplary and various modifications as to the number of available receiver units and/or number of antenna elements and/or number of switches 206 are possible. Furthermore, one or more of switches 206 may be used to connect different antenna arrays (e.g. provided at different physical locations) to one or more receiver units 206, the output data streams of which may be subjected to RDF processing in the RDF device 210 (e.g. this may allow for triangulation or determination of the radio signal source's location). Moreover, it is also possible to connect distinct subsets of the antenna elements 102-1 to 102-8 of the antenna array 102 via multiple switches to multiple receive units 206 that can process the signals in parallel (the number of switches and receiver units corresponding in number of the number of subsets of antenna elements). Individual antenna elements may also be directly coupled to dedicated receiver units in a 1-to-1 fashion without an intermediate switch 204 (which may however be undesirable in certain applications due to the higher number of RF connections and receiver units being required).

The system 200 suggested in Fig. 2 and its operation may for example provide the following advantages. Since the system 200 generates its own clock by injecting the broadband noise signal into one of the input ports of the switch 204, the receiver unit 206 can recover the cycle duration from the multiplexed signal on the radio frequency line 208, and may use this information to synchronize to the multiplexed signal structure of the multiplexed signal on the radio frequency line 208. This further allows the receiver unit 204 to separate or demultiplex the individual multiplexed signals arriving in a time-multiplexed fashion on the radio frequency line 208. For this, the receiver unit 204 does not require any knowledge of the cycle duration, by only information on the number of antenna signals in the multiplexed signal structure (and optionally their individual signal durations if not uniform) may be known to the receiver unit 204 (e.g. by means of configuration). Therefore, the receiver unit 204 may not need any control interface to the switch 204 (e.g. to trigger switching to the next input port as outlined in connection with Fig. 1). This allows for a simpler deployment of the system 200 at reduced costs and complexity. In principle, in some example implementation the switch 204 may inject the broadband noise signal in between the input signals of the antenna elements, which would allow the receiver unit 204 to synchronize and recover the multiplexed signal structure without additional knowledge (however at increased signal processing latency).

Furthermore, as there is no control interface between the receiver unit 206 and the switch 204 for controlling selection of individual input ports, the latency of the control signals for controlling the switch 204 is no longer an issue. Therefore, the switch 204 may autonomously/automatically rotate through the input ports significantly faster in comparison to the scenario in Fig. 1 where the switching from one input port to another is under control by the RDF device 106 via the control link 110. Shorter cycle durations of the switch 204 to rotate through the input ports in turn allows for the capability to measure shorter radio signals, e.g. radio signals which are pulsed or where data transmission is in bursts and have pulse or burst durations of significantly shorter than 20ms. For RDF methodologies exploring PoA or amplitude variations in the received radio signals, the signal power and/or amplitude of the radio signal pulses or bursts should be ideally constant or close to constant in the cycle duration of the switch 204 to obtain accurate determination of the bearing with high confidence. Note that in case of short signal pulses or bursts it might be possible to determine a bearing of a received radio signal also based on repeated transmissions of the signal pulses or bursts, i.e. repeated rotations of the switch 204 and corresponding measurements, where the confidence in the bearing determined by RDF may increase with each RDF operation on input signals of the antenna elements obtained in one of the successive rotations of the switch 204.

In general, the disclosure encompasses scenarios where there are N≥2 antenna elements in an array 102, and there are M<N receiver units 206 and correspondingly M<N switches 204, so that each switch 204 has at least two antenna elements and a broadband noise signal from a broadband noise generator 202 coupled to its input ports.

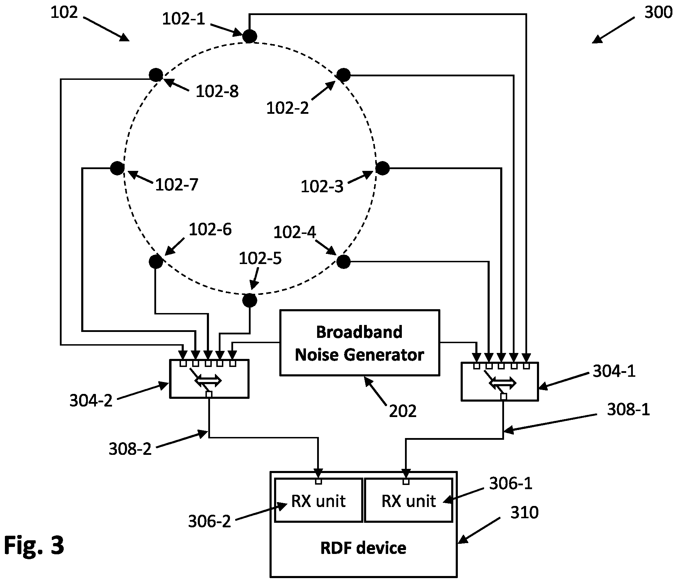

**Fig. 3** shows another system 300 suitable for RDF according to another embodiment of the disclosure. In this example implementation, M=2 and N=8. In the example shown in Fig. 3, the antenna array 102 contains eight antenna elements 102-1 to 102-8 as in Fig. 2, which are - however - connected to two switches 304-1 and 304-2Input ports of switch 304-1 are connected to a first subset of antenna elements, including antenna elements 102-1 to 102-4, and the broadband noise generator 202. Input ports of switch 304-2 are connected to a second subset of antenna elements, including antenna elements 102-5 to 102-8, and the broadband noise generator 202. Switches 304-1 and 304-2 are substantially identical to switch 204 in Fig. 2. Each of switches 304-1 and 304-2 thus cycles through their input ports connected to the respective subset of antenna elements and the broadband noise generator 202 to generate a time multiplexed signal as explained in connection with switch 204 above and provides the respective time multiplexed signal to a one of the two receiver units 306-1 and 306-2 via respective RF connections illustrated as a radio signal lines 308-1 and 308-2. RF connections may be implemented in a fashion similar to the RF connection between switch 204 and receiver unit 206 in Fig. 2. The cycle durations of the switches 304-1 and 304-2 may be identical to simplify subsequent signal processing by the RDF device 310, but this is not mandatory.

The two receiver units 306-1 and 306-2 are substantially identical in structure and operation as receiver unit 206 described in connection with Fig. 2. In comparison to the system 200 in Fig. 2, the system 300 as shown in Fig. 3 may allow for reducing the duration of the switching cycle of the switches 304-1 and 304-2 in comparison to the switch 204, as the number of input ports to be multiplexed is reduced. The shorter duration of the rotation cycle may facilitate radio direction-finding for radio signals having event shorter duration. Alternatively, if shortening the duration of the rotation cycle is of less concern in the given application scenario, the time interval where a given input port is connected to the output port of switches 304-1 and 304-2 can be increased in comparison to the case in Fig. 2, if the same duration of the rotation cycle is to be maintained.

Further, the scenario in Fig. 3 shows and example where there is one broadband noise generator 202 shared by switches 304-1 and 304-2. There may be also more than one broadband noise generator 202, e.g. each switch 204, 304-1, 304-2 may have its own broadband noise generator 202 connected to an input port or include its own broadband noise generator 202.

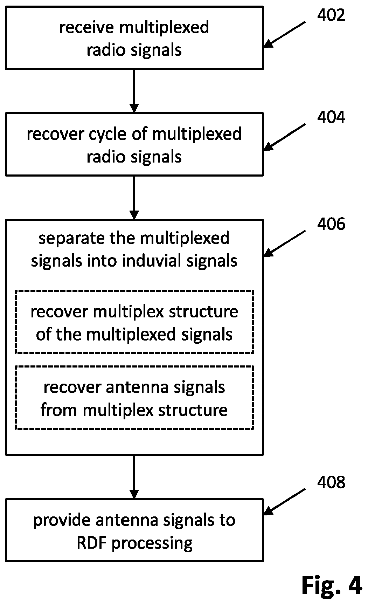

**Fig. 4** shows a flow chart illustrating another aspect of this disclosure. Specifically, Fig. 4 illustrates an example embodiment a method for separating (or demultiplexing) time-division multiplexed signals. The method may be for example executed in a receiver unit 206, 306-1, 3062 of a system 200, 300 or the RDF device 210, 310 in accordance with the aspect of the disclosure.

The method may comprise the following receiving 402 multiplexed radio signals. The multiplexed radio signals may be received via a radio signal line 208, 310-1, 310-2. The multiplexed radio signals may be cyclically time-division multiplexed signals. The multiplexed signals include signals of a radio frequency signal received at two or more antenna elements of an antenna array 102 (comprising N≥2 antenna elements) and a signal of a broadband noise source (e.g. broadband noise generator 202) which are cyclically repeated in known or configured order/pattern.

The method further comprises recovering 404 the cycle of the multiplexed signals. This may include determining the cycle of the cyclically repeated signal of the broadband noise source, as described above. The cyclically repeated signal of the broadband noise source may be considered forming a clock signal having the determined cycle, which corresponds to one rotation of the switch 204, 304-1, 304-2, and can be used to synchronize the receiver chain of the receiver unit 206, 306-1, 306-2 with the multiplexed signals being received as outlined above in connection with Figs. 2 and 3.

Further, the method comprises separating 406 the signals received from the two or more antenna elements of the array 102 based on the determined cycle. This may include recovering the multiplex structure of the signals received via the radio signal line 208, 310-1, 310-2 based on the determined cycle. Knowing the multiplex structure, the individual signals of the antenna elements can be demultiplexed and/or separated into distinct data streams. To obtain the data streams for the individual antenna elements, the multiplexed signals may be subjected to one or more of ADC, frequency domain conversion, and/or filtering, as discussed herein above. The so obtained (processed) data streams may be provided 408 to RDF processing, for example, to RDF device 210, 310, which may perform RDF on the data streams. However, the embodiments are not limited to the kind of further processing of the demultiplexed antenna signals.

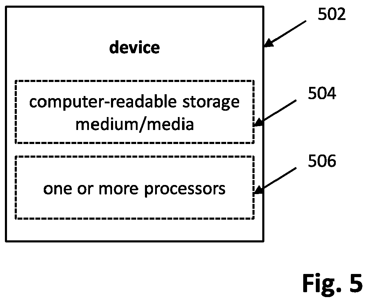

The aspects of the disclosure may also be implemented using one or more computer readable media which store(s) instructions that, when executed by a processor of a device (e.g. a device implementing the receiver unit or a radio direction-finding device) cause the device to implement the method for separating (or demultiplexing) time-division multiplexed signals according to one of the various embodiments thereof discussed in this disclosure. An example embodiment is shown in **Fig. 5****.** A device 502, which could be for example one of switches 204, 304-1, 304-2, one of receiver units 206, 306-1, 306-2, or RDF device 210, 320) may include one or more non-volatile and/or volatile storage media 504 to store software instructions, for example in the format a firmware, operating system, software application, etc. The execution of the instructions by one or more processors 506 of the device 502 will cause the device 502 to perform at least one of the different aspects of this disclosures or the embodiments and implementations described herein with regard to the drawings. Further, the individual operations performed by one of switches 204, 304-1, 304-2, one of receiver units 206, 306-1, 306-2, or RDF device 210, 320 may be embodied in such software instructions that when executed in the respective device will cause the device to perform the corresponding operation(s) as outlined in connection with a least one of the different aspects of this disclosures or the embodiments and implementations described herein with regard to the drawings.

The examples embodiments and implementations thereof may also be implemented in methods, means for performing acts or blocks of the methods, at least one machine-readable medium including executable instructions that, when performed by a machine (e.g. one of switches 204, 304-1, 304-2, one of receiver units 206, 306-1, 306-2, or RDF device 210, 320, the like) cause the machine to perform acts of the methods or of system 200, 300 or any apparatus thereof for separating (or demultiplexing) time-division multiplexed signals.

The foregoing description of one or more implementations provides illustration and description but is not intended to be exhaustive or to limit the scope of embodiments to the precise form disclosed. Modifications and variations are possible in light of the above teachings or may be acquired from practice of various embodiments.

## Claims

1. A system comprising:
an integer number of *N* ≥ 2 antenna elements for receiving radio waves of a radio frequency signal;
an integer number of *M* < *N* receiver units, wherein at least one of the receiver units is connected via a switch to at least two of the *N* ≥ 2 antenna elements and a broadband noise source; and
the switch, wherein the switch is configured to connect the at least one receiver unit cyclically and in a known or configured order/pattern to the broadband noise source and the at least two antenna elements;
wherein the receiver unit is configured to distinguish the signals received from the at least two antenna elements based on the cycle of the cyclically received signals of the broadband noise source.

2. The system according to claim 1, wherein the at least one receiver unit is configured to receive time-division multiplexed signals of the at least two antenna elements and the broadband noise source from the switch; and to synchronize with the time-division multiplexed signals based on the cycle of the cyclically received signals of the broadband noise source to distinguish and/or separate the individual signals from each other.

3. The system according to claim 1 or 2, wherein the at least one receiver unit is connected to the switch via an RF line or a fiber optic line, and optionally wherein the at least two antenna elements are connected to the switch via an RF line or a fiber optic line.

4. The system according to any one of claims 1 to 3, further comprising a radio direction-finding unit configured to perform a radio direction-finding of the radio frequency signal based on the signals received from the at least two antenna elements and optionally further signals received by another one or other ones of the *N* ≥ 2 antenna elements.

5. The system according to any one of claims 1 to 4, wherein the receiver unit is further configured to determine the cycle of the cyclically received signals of the broadband noise source, and based on the cycle, determine the switching cycle between the received signals from the broadband noise source and the at least two antenna elements based on the cycle of the cyclically received signals of the broadband noise source.

6. The system according to any one of claims 1 to 5, wherein M=1 and the switch is configured to connect the receiver unit cyclically and in the known or configured order/pattern to the broadband noise source and the at least two of N antenna elements, or
wherein M=1 and the switch is configured to connect the receiver unit cyclically and in the known or configured order/pattern to the broadband noise source and the N antenna elements.

7. The system according to any one of claims 1 to 5, wherein the system comprises *M* ≥ 2 receiver units and at least *N* = 2 · M antenna elements,
wherein the system comprises M switches, wherein each of the M switches is configured to connect one of the M receiver units cyclically and in a known or configured order/pattern to the broadband noise source and at least two of the N antenna elements;
wherein each of the M receiver units is configured to distinguish the signals received from the at least two antenna elements based on the cycle of the cyclically received signals of the broadband noise source.

8. The system according to any one of claims 1 to 7, wherein the radio frequency signal is a pulsed signal or a signal burst, respectively, and the cycle of the switch is selected or configurable based on the pulse duration/burst duration of the pulsed signal or the signal burst, respectively, or
wherein the radio frequency signal is a pulsed signal or a burst signal, respectively, and the cycle of the switch is equal to or less than the pulse duration/burst duration of the pulsed signal or the signal burst, respectively

9. The system according to claim 8, wherein the duration of the pulsed signal or the burst duration of the burst signal, respectively, is in the range of 500 *µs* or less, preferably in the range of 100 *µs* or less.

10. The system according to any one of claims 1 to 9, wherein the switch is configured to connect the receiver unit automatically and cyclically in the known or configured order/pattern to the broadband noise source and the at least two antenna elements.

11. The system according to any one of claims 1 to 10, wherein the broadband noise source and the at least two antenna elements are connected to different input ports of the switch and the receiver unit is connected to the output port of the switch.

12. The system according to claim 11, wherein time period of the cycle of the switch with which the switch connects the different input ports of the switch in the known or configured order/pattern to the output port of the switch is configurable or adjustable; and/or wherein the input ports of the switch to be connected in the known or configured order/pattern to the output port of the switch are configurable or adjustable.

13. A method for separating time-division multiplexed signals, the method comprising:
receiving via a radio frequency signal line cyclically time-division multiplexed signals, the multiplexed signals including signals of a radio frequency signal received at at least two antenna elements of an antenna array comprising N ≥ 2 antenna elements and a signal of a broadband noise source broadband noise source which are cyclically repeated in known or configured order/pattern;
determining the cycle of the cyclically repeated signal of the broadband noise source; and
separating the signals received from at least two antenna elements based on the determined cycle.

14. The method according to claim 13, further comprising:
receiving the time-division multiplexed signals of the at least two antenna elements and the broadband noise source from a switch that generates the time-division multiplexed signals by cyclically switching between the signals of the two antenna elements and the broadband noise source; and
synchronizing with the time-division multiplexed signals based on the cycle of the cyclically received signals of the broadband noise source to distinguish the individual signals from each other, and
wherein separating the signals received from at least two antenna elements is based on the synchronization.

15. A computer-readable storage medium storing instructions that, when executed by a processor unit of a device, cause the device to perform the method according to claim 13 or 14.
